# EUROPEAN PATENT SPECIFICATION

(11) **EP 3 210 888 B1**
(45) Date of publication and mention of the grant of the patent: **09.12.2020**
(21) Application number: 17156077.4
(22) Date of filing: 14.02.2017
(51) Int. Cl.: B64D 11/04, B64D 11/00, B65F 1/14

(54) **TROLLEY FOR COLLECTING WASTE PRODUCTS IN A VEHICLE, CABIN MONUMENT FOR A VEHICLE, FLUID RECEIVING CONTAINER AND VEHICLE**
WAGEN ZUM SAMMELN VON ABFALLPRODUKTEN IN EINEM VEHIKEL, KABINENMONUMENT FÜR EIN VEHIKEL, FLÜSSIGKEITSAUFNAHMEBEHÄLTER UND VEHIKEL
CHARIOT POUR LA COLLECTE DE DÉCHETS DANS UN VÉHICULE, AMÉNAGEMENT DE CABINE POUR UN VÉHICULE, CONTENEUR DE RÉCEPTION DE FLUIDE ET VÉHICULE

(30) Priority: 25.02.2016 DE 102016103376
(43) Date of publication of application: 30.08.2017
(73) Proprietor: Airbus Operations GmbH, 21129 Hamburg (DE)
(72) Inventor: Lutzer, Wilhelm, 21129 Hamburg (DE); Reiss, Matthias, 21129 Hamburg (DE); Kiehne, Oliver, 21129 Hamburg (DE); Spille, Marc, 21129 Hamburg (DE)

(56) References cited:
- EP-A1- 2 695 812
- WO-A1-2011/091047
- WO-A1-2016/189131
- WO-A2-2010/020964
- US-A- 3 735 898
- US-A1- 2002 092 580
- US-A1- 2009 012 485
- US-A1- 2015 108 888
- US-A1- 2015 343 732
- US-B1- 6 223 361

## Description

### TECHNICAL FIELD

The invention pertains to a trolley for collecting waste products in a vehicle, a cabin monument for a vehicle, a fluid receiving container and a system for a vehicle.

### BACKGROUND OF THE INVENTION

A trolley for collecting waste products is used in a vehicle, particularly in an aircraft. Foods and beverages are frequently consumed aboard vehicles that serve for transporting passengers and result in waste products. The waste products may therefore consist of solid and/or liquid waste. Aboard passenger aircraft, in particular, these waste products are predominantly collected by the cabin crew. The collected waste products have to be disposed after the end of the journey. Since the disposal at random destinations is respectively associated with disposal fees, waste products are frequently stored aboard the vehicle and subsequently disposed at a target location, particularly a home airport. In vehicles intended for traveling short distances, in particular, the cabins of the vehicles are designed for a large number of passenger seats. The vehicles therefore only have a small capacity for the storage waste products.

For example, the waste products may comprise paper cups, small cartons, bottles, cans and/or bags. The waste products may furthermore comprise fluids such as, for example, the remains of a beverage in a can or bottle. If waste products of this type are collected in garbage bags, they contain a mixture of solid waste and liquid waste. This can be attributed, for example, to cans or bottles with remains of a fluid being placed into said garbage bag. Although the fluids in the cans or bottles may basically be poured into a drain, for example, in a galley or in a laboratory, this proved to be impractical. The waste products are collected by means of the rolling trolleys, with which the cabin crew walks through an aisle of the vehicle and in the process collects waste products from the passengers.

If solid waste and liquid waste products are collected in a common garbage bag, these waste products subsequently require an elaborate separation prior to their disposal. It was furthermore determined that the fluid content of the waste products collected in such a garbage bag is not compactible. Although the compaction of the waste products in the garbage bag could be increased, for example, by extracting air from the garbage bag, this compaction is still limited by the fluid content of the waste products.

Document EP 2 949 459 A1 discloses a waste compaction system. The waste compaction system comprises a trolley with an internally arranged compaction enclosure that has rigid lateral surfaces, wherein the compaction enclosure can be compacted by extracting air from the interior thereof. While the air is extracted, the rigid lateral surfaces move toward one another in the horizontal direction such that a vertically elongate and horizontally contracted compaction enclosure is formed and the waste products are compacted therein.

US 2015/343732 A1 shows a waste compaction system for a vehicle having a trolley for storing waste, and a docking station, which is integratable into a cabin monument for inserting the trolley. The trolley includes a housing having an opening for inserting waste, a vacuum waste compacting mechanism inside the housing and a first suction port accessible from outside the housing, the first suction port being couplable with the vacuum waste compacting mechanism.

US 2015/108888 A1 discloses a liquid container. US 2009/012485 discloses a trolley with a separate liquid receiving container.

### SUMMARY OF THE INVENTION

An objective of the invention may be seen in making available a device for collecting waste products that allows an advantageous disposal of the waste products.

According to one aspect, this objective is solved by means of a system for collecting waste products in a vehicle with the characteristics of independent claim 1. Advantageous designs and preferred embodiments of the system are disclosed in the corresponding dependent claims and the following description.

The system comprises a trolley preferably realized in the form of a movable cart. The trolley may also be referred to as a cart, a rolling cart or a transport cart. The trolley may be pulled or pushed. For this purpose, rollers may be arranged on the underside of the trolley housing such that the trolley may be pushed or pulled and thereby displaced on a vehicle floor, particularly an aisle in a cabin of the vehicle.

The vehicle is preferably an aircraft. The vehicle does not form part of the trolley. In fact, the trolley is used for collecting waste products in the vehicle.

The trolley housing of the trolley may be realized in the form of an at least essentially solid or rigid housing. For example, the trolley housing may be realized in the form of a frame housing. The trolley housing may alternatively or additionally be provided with closed sidewalls and/or a closed bottom. A door may be provided, in particular, in a sidewall of the trolley housing such that the trolley can be laterally open by means of the door in order to laterally access the interior of the trolley housing. Furthermore, the sidewalls of the trolley housing and/or the bottom of the trolley housing may comprise recesses and/or ports.

The trolley housing comprises an upper housing and is equipped with a trolley housing cover that is pivotably mounted on the trolley housing. In order to collect waste products, the trolley housing cover may be opened such that waste products may be placed into the trolley through the thusly accessible upper housing opening.

A waste enclosure is suspended in the trolley housing. In an example, the waste enclosure may be hooked in the trolley housing. The waste enclosure is realized in the form of a bag or a sack. The waste enclosure is preferably made of plastic, particularly fiber-reinforced plastic. The waste enclosure may be suspended in an interior of the trolley housing. The waste enclosure comprises an upper enclosure opening. This enclosure opening may form an opening to an interior of the waste enclosure. The waste enclosure preferably is at least indirectly fastened on the trolley housing, particularly on an inner section of the trolley housing arranged adjacent to the housing opening, with an edge on the side of the enclosure opening. In this case, the waste enclosure may be detachably fastened on the trolley housing. The enclosure opening and the housing opening are arranged relative to one another in such a way that waste products can be introduced into the trolley through the housing opening and the enclosure opening. The waste enclosure may be realized in the form of a trash bag for receiving waste products. In this case, the waste products can be directly placed into the trash bag through the two aforementioned openings. Alternatively, a separate trash bag may be suspended in the waste enclosure. In this case, the trash bag may be detachably fastened on the waste enclosure and/or on the trolley housing. The waste enclosure or the trolley housing may respectively comprise corresponding clamping means for detachably fastening the trash bag thereon. The trash bag comprises an upper bag opening, wherein the bag opening and the enclosure opening are arranged relative to one another in such a way that waste products can be introduced into an interior of the trash bag through the enclosure opening and the bag opening. If the trash bag is formed by the waste enclosure, the waste products can be introduced into an interior of the waste enclosure. Due to the above-described design options, the enclosure opening and the housing opening and/or the enclosure opening, the bag opening and the housing opening can be aligned relative to one another. Whenever preferred features, advantages and/or effects of the waste enclosure or the trash bag are mentioned below, they may refer to the waste enclosure for directly collecting waste products and/or to a separate trash bag that is suspended in the waste enclosure in the form of an exchangeable trash bag.

In addition, the trolley comprises a fluid receiving container with an upper container opening. Fluid may be introduced into an interior of the fluid receiving container through the upper container opening. The fluid receiving container is designed for receiving fluid. For this purpose, lateral walls and/or a bottom of the fluid receiving container may be realized in a fluid-tight fashion. The fluid receiving container is preferably realized rigidly. For example, the lateral walls and/or the bottom of the fluid receiving container may be made of a rigid material. The lateral walls and/or the bottom of the fluid receiving container are preferably made of plastic, metal or a combination thereof. If the lateral walls and/or the bottom of the fluid container are made of plastic, this plastic may be reinforced with fibers. Due to the rigid design of the fluid receiving container, the shape of the fluid receiving container can be ensured during its use such that the fluid receiving container can accommodate a certain volume of fluid. In other words, the fluid receiving container is preferably dimensionally stable. In addition, a fluid-tight window may be integrated into one of the lateral walls of the fluid container such that the filling level of the fluid container is visible. Otherwise, the sidewalls may be realized opaquely. The fluid receiving container may be realized in the form of an at least essentially solid or rigid container. In an example, the fluid receiving container may be formed as a unit being formed independently form the trolley housing. Thus, the fluid receiving container may be formed as an individually handable unit or individually handable container unit.

The fluid receiving container is arranged in or laterally on the trolley housing. The fluid receiving container may be suspended in the trolley housing for this purpose. The fluid container furthermore may preferably be suspended in the waste enclosure and/or in the trash bag, wherein the fluid receiving container is preferably fastened on the trolley. This design provides the advantage that the external dimensions of the trolley housing are not changed. The trolley may therefore still have standardized dimensions such as, for example, the dimensions of a full-size trolley or a half-size trolley. Alternatively, the fluid receiving container may be laterally arranged on the housing. For this purpose, the fluid receiving container may be laterally suspended on the trolley housing and/or fastened thereon. The fastening of the fluid receiving container may be realized by respectively providing the fluid receiving container and the trolley housing with correspondingly designed fastening elements. For example, the fluid receiving container may engage into a groove or a bore of the trolley housing with a corresponding hook in order to be fastened thereon. In this case, the fluid receiving container is detachably connected to the trolley housing. However, the fluid container may alternatively also be permanently connected to the trolley housing. Preferably, no direct fluidic connection respectively exists between the fluid receiving container and the waste enclosure or the trash bag, which is preferably suspended therein. Further, the interior of the fluid receiving container may hydraulically and/or pneumatically decoupled from an interior of the waste enclosure. It is furthermore preferred to realize the fluid receiving container in the form of an independent unit such that the fluid container may be arranged on the trolley housing in a module-like fashion.

The fluid receiving container comprises a container suction port. The container suction port is designed for providing a fluidic connection with the interior of the fluid receiving container. The container suction port therefore serves for extracting a fluid from the interior of the fluid container. The container suction port is arranged in such a way that a fluid can be extracted from a bottom region of the interior of the fluid receiving container. For this purpose, the container suction port may be integrated into a lower end section of a lateral wall or into the bottom wall of the fluid receiving container. The container suction port may be realized, for example, in the form of a tubular connecting element. It is furthermore preferred that the container suction port is realized in the form of a check valve, wherein the check valve allows a volume flow from the interior of the fluid receiving container and blocks a volume flow in the opposite direction. In addition, the check valve is preferably realized in an automatically closing fashion such that a minimum differential pressure has to be provided between the inlet and the outlet of the check valve in order to open the check valve. Otherwise, the check valve closes automatically, for example, under the influence of a spring force. The minimum differential pressure is preferably chosen such that the check valve does not open when the interior of the fluid receiving container is completely filled with fluid. A fluid line or another port may be coupled to the container suction port in order to extract a fluid from the fluid receiving container. An additional port may particularly be assigned to the trolley housing, wherein the container suction port is coupled to the additional port when the fluid receiving container is arranged on the trolley housing.

Since the fluid receiving container is respectively decoupled from the waste enclosure or the trash bag, a separation between the liquid waste and the remaining waste may already take place during the collection of the waste products. The fluids may be placed into the fluid receiving container. The remaining waste products may be respectively placed into the waste enclosure or into the trash bag. This simplifies the subsequent disposal of the different types of waste products. In addition, no mixing of waste products takes place within the trolley. For example, when the trolley is coupled to a docking station, the fluid may be extracted from the fluid receiving container and stored in a container provided in the trolley or the vehicle for this purpose. If a trash bag is suspended in the waste enclosure, this trash bag can likewise be disposed separately. In this case, the trash bag and/or the waste enclosure can be compacted such that they respectively have a particularly small volume in order to thereby simplify the handling and storage.

An advantageous embodiment of the system is characterized in that the fluid receiving container comprises a container pressure port, by means of which rinsing fluid may be filled into the interior of the fluid receiving container. The container pressure port may be integrated into a wall and/or a bottom of the fluid receiving container. The container pressure port may be realized in the form of a tubular connecting element. The container pressure port may particularly be realized in the form of a check valve that allows a volume flow into the interior of the fluid receiving container and blocks a volume flow in the opposite direction. On its end facing the interior, the container pressure port may furthermore be realized in a nozzle-like fashion such that rinsing fluid may be sprayed into the interior of the fluid receiving container in order to remove potential residues from the inner surfaces of the fluid receiving container. The rinsing fluid, which is respectively filled or sprayed into the interior of the fluid receiving container, may be extracted again through the container suction port. For example, water and/or a liquid cleansing agent may be used as rinsing fluid. The container pressure port is preferably designed for being coupled to an additional port and/or a fluid line in order to supply the rinsing fluid to the container pressure port. The aforementioned additional port and/or the aforementioned fluid line may be assigned to the trolley housing such that a fluidic connection between the container pressure port and the additional port and/or the fluid line of the trolley housing is produced when the fluid receiving container is arranged on the trolley housing.

A container cover may be assigned to the fluid receiving container, wherein this container cover is hinged on the fluid receiving container. The cover may be closed in order to clean the interior of the fluid receiving container such that rinsing fluid is effectively prevented from splashing out.

Another advantageous embodiment of the system is characterized in that the fluid receiving container is detachably connected to the trolley housing. This simplifies the disposal of fluid collected in the interior of the fluid receiving container. For example, the fluid receiving container can be detached from the trolley housing in order to pour the collected fluid into a drain that is connected to a fluid collecting tank. Such a drain may be assigned, for example, to a cabin monument of the vehicle. Since the fluid receiving container may be detached from the trolley housing, the interior of the fluid receiving container may also be cleaned in a particularly simple fashion, for example, by placing the fluid receiving container into a washer. The fluid receiving container may alternatively or additionally also be manually cleaned by the cabin crew. In order to provide the detachable connection, the fluid receiving container and the trolley housing may comprise correspondingly designed fastening elements. These fastening elements may be realized in the form of a plug-type connection. When the fluid receiving container is arranged in or on the trolley housing, these connecting elements engage into one another in such a way that a mechanical connection, particularly a positive and/or non-positive connection, is produced.

The fluid receiving container may furthermore comprise a handle that is preferably arranged on the outer side of a sidewall of the fluid receiving container. In this way, the fluid receiving container may be taken hold of by the cabin crew and then detached from the trolley housing by disengaging the correspondingly designed fastening elements. The fluid container may thereby be removed from the trolley housing.

Another advantageous embodiment of the system is characterized in that the trolley housing comprises a housing docking station, wherein the fluid receiving container comprises a coupling unit, by means of which the fluid receiving container is detachably coupled to the housing docking station, in order to arrange the fluid receiving container in or laterally on the trolley housing. The housing docking station may therefore be designed for being coupled to the coupling unit of the fluid receiving container in order to produce the detachable connection between the fluid receiving container and the trolley housing. The housing docking station and the coupling unit may comprise correspondingly designed connecting elements for producing a mechanical connection, particularly a positive and/or non-positive connection. For example, the correspondingly designed connecting elements may engage into one another when the fluid receiving container is coupled to the housing docking station in order to thereby produce the desired connection. Due to the housing docking station, a predefined position, in which the fluid receiving container may be arranged, is assigned to the fluid receiving container in or on the trolley housing. This respectively simplifies the handling of the trolley housing and of the fluid receiving container. The fluid receiving container is always detachably arranged at the same location in or on the trolley housing.

Another advantageous embodiment of the system is characterized in that the housing docking station comprises a station suction port, wherein the container suction port and the station suction port are formed in such a way that a fluidic connection between the container suction port and the station suction port of the housing docking station is produced when the fluid receiving container is coupled to the housing docking station by means of the associated coupling unit. This coupling automatically produces a fluidic connection between the container suction port and the station suction port of the housing docking station. The handling is thereby simplified because the fluidic connection does not have to be subsequently produced. It is furthermore ensured that fluid cannot escape from the interior of the fluid receiving container unobstructedly, but rather is extracted at a predefined location by means of the station suction port. It is furthermore conceivable that the container suction port and the station suction port of the housing docking station positively engage into one another when the fluid receiving container is coupled to the trolley housing such that they likewise produce a positive connection, which ensures and/or promotes the coupling of the fluid receiving container to the housing docking station.

Another advantageous embodiment of the system is characterized in that the housing docking station comprises a station pressure port, wherein the container pressure port and the station pressure port of the housing docking station are formed in such a way that a fluidic connection between the container pressure port and the station pressure port of the housing docking station is produced when the fluid receiving container is coupled to the housing docking station by means of the associated coupling unit. This design provides the advantage that a fluidic connection between the container pressure port and the station pressure port of the housing docking station is automatically produced when the fluid receiving container and the housing docking station are coupled to one another. In this case, the container pressure port and the station pressure port of the housing docking station may form correspondingly designed ports. The container pressure port and the station pressure port of the housing docking station may also form correspondingly designed connecting elements for producing a mechanical connection, particularly a positive and/or non-positive connection. Rinsing fluid may be conveyed or pumped into the interior of the fluid receiving container via the fluidic connection being produced between the two aforementioned ports. Consequently, the fluid receiving container does not necessarily have to be detached from the trolley housing in order to carry out the desired cleaning of its interior. For example, the trolley may thereby be moved on or in a docking station, particularly of the vehicle, wherein the rinsing fluid may be conveyed or sprayed from the docking station into the interior of the fluid receiving container via the fluidic connection between the docking station and the trolley and then through the station pressure port of the housing docking station and the container pressure port. This simplifies the handling, as well as the cleaning of the interior of the fluid receiving container.

During the coupling or decoupling of the fluid receiving container, it may occur that a small quantity of fluid escapes from the container suction port, the container pressure port, the station suction port and/or the station pressure port. A drip pan may be assigned to the housing docking station in order to collect this fluid.

A locking mechanism may furthermore be assigned to the housing docking station in order to lock the connection between the fluid receiving container and the cabin docking station. In this case, a lever may be provided in order to activate or deactivate the locking mechanism.

It furthermore proved advantageous to provide the housing docking station with a hinged cover for covering and/or closing the station suction port. This hinged cover may prevent the station suction port from being freely accessible when the fluid receiving container is detached from the housing docking station. In this case, the hinged cover may be mounted in such a way that it covers or closes the station suction port, for example under the influence of a spring force, when the fluid receiving container is detached from the housing docking station. The housing docking station may additionally or alternatively comprise another hinged cover for covering or closing the station pressure port. With respect to this hinged cover, analogously reference is made to the preceding explanations and advantages of the aforementioned hinged cover. Each of the hinged covers prevents the ports of the docking station from being freely accessible. This improves the hygiene of the trolley and the docking station, respectively.

During the coupling or decoupling of the fluid receiving container, it may occur that a small quantity of fluid escapes from the container suction port, the container pressure port, the station suction port and/or the station pressure port. A drip pan may be assigned to the cabin docking station in order to collect this fluid.

It is furthermore conceivable to provide the fluid receiving container with a hinged cover for covering and/or closing the container suction port. In this case, the hinged cover may be mounted in such a way that it covers or closes the container suction port, for example by means of a spring, when the fluid receiving container is respectively detached from the trolley housing or from the housing docking station. The container suction port is thereby prevented from being freely accessible when the fluid receiving container is handled while it is respectively detached from the trolley or the trolley housing. This improves the hygiene while the fluid receiving container is handled. It is additionally or alternatively conceivable to provide the fluid receiving container with an additional hinged cover for covering and/or closing the container pressure port. With respect to this additional hinged cover, analogously reference is made to the preceding description of the aforementioned hinged cover of the fluid receiving container. It is also conceivable to realize both hinged covers of the fluid receiving container or of the housing docking station in the form of a common hinged cover.

Another advantageous embodiment of the system is characterized in that the housing docking station is realized such that it may be laterally extended from the trolley housing or laterally pivoted out of the trolley housing. In this case, the fluid receiving container can be laterally arranged on the trolley housing by means of the housing docking station. In this respect, analogously reference is made to the above-described preferred embodiments. The fluid receiving container may be detached from the housing docking station if the trolley should be used without the fluid receiving container. This means that the housing docking station is not needed in this case. Consequently, the housing docking station can be respectively retracted or pivoted back into the trolley housing such that the external dimensions of the trolley or the trolley housing are respectively reduced. If the housing docking station may be laterally extended from the trolley housing, a corresponding linear guide may be provided in order to allow the extension of the housing docking station. Accordingly, the housing docking station may thereby also be laterally retracted back into the trolley housing. If the housing docking station may be laterally pivoted out of the trolley housing, the housing docking station may be pivotably mounted on the trolley housing by means of a hinge. In this way, the housing docking station can be pivoted out of the trolley housing and subsequently pivoted back into the trolley housing. It proved particularly advantageous to realize the housing docking station in the form of a rigid plate or a rigid receiving element of sorts.

Another advantageous embodiment of the is characterized in that the trolley comprises a trolley suction port. The trolley suction port is coupled to the container suction port or the station suction port of the housing docking station by means of a fluid suction line in order to produce a fluidic connection. The trolley suction port serves for connecting the trolley to an additional suction port of the vehicle. The additional suction port may be assigned to a docking station of the vehicle. The trolley suction port therefore makes it possible to indirectly produce a fluidic connection with the interior of the fluid receiving container. For this purpose, the fluid suction line either connects the trolley suction port directly to the container suction port or to the station suction port of the housing docking station, wherein the station suction port can be coupled to the container suction port in order to thereby produce the fluidic connection. If the trolley suction port is directly connected to the container suction port by means of the fluid suction line, it is preferred to realize the coupling between the fluid suction line and the container suction port in a detachable fashion. In this case, a plug-type coupling or another rapid-action coupling may be produced between the fluid suction line and the container suction port. When the fluid receiving container is filled with fluid, a vacuum source can be connected to the trolley suction port in order to extract the fluid from the fluid receiving container. Consequently, it is not necessary to detach the fluid receiving container from the trolley housing. In fact, the trolley may be pushed, for example, in or on a docking station of the vehicle in order to subsequently connect the trolley suction port to the vacuum source.

Another advantageous embodiment of the system is characterized in that the trolley comprises a trolley pressure port. The trolley pressure port is coupled to the container pressure port or the station pressure port of the housing docking station by means of a fluid pressure line in order to produce a fluidic connection. The above-described characteristics and advantages of the preceding embodiment may apply analogously to this embodiment. If the trolley pressure port is indirectly coupled to the container pressure port by means of the fluid pressure line, a detachable coupling, particularly a plug-type coupling, may be provided between the fluid pressure line and the container pressure port. However, it is likewise conceivable to use other rapid-action couplings. Consequently, rinsing fluid can be conveyed to the container pressure port through the trolley pressure port and the fluid line, as well as optionally through the station pressure port of the housing docking station, and/or sprayed into the interior of the fluid receiving container through the container pressure port such that the fluid receiving container is cleaned with the rinsing fluid from inside. In order to supply the trolley pressure port and the elements connected thereto with rinsing fluid, the trolley can be pushed in or on a docking station of the vehicle, wherein the trolley pressure port preferably is automatically connected to a rinsing fluid pressure source in order to convey said rinsing fluid to the interior of the fluid receiving container. Consequently, it is not necessary to detach the fluid receiving container from the trolley in order to clean its interior. In fact, the fluid receiving container may remain attached to the trolley housing in order to carry out the cleaning process.

Another advantageous embodiment of the system is characterized in that the fluid receiving container is dimensionally stable. For this purpose, the fluid receiving container may be realized in the form of a plastic fluid receiving container. The plastic may be reinforced with fibers. However, it is also conceivable to realize the fluid receiving container in the form of a metal fluid receiving container. Due to its dimensionally stable design, the fluid receiving container can be handled very safely and easily. Furthermore, the fluid receiving container is preferably impact-resistant such that an inadvertent escape of fluid from the fluid receiving container is effectively prevented.

Another advantageous embodiment of the system is characterized in that the fluid receiving container is realized in a foldable fashion, particularly such that it can be collapsed and/or unfolded. For example, at least one sidewall and/or the bottom of the fluid receiving container may be foldable in order to reduce the exterior dimensions of the fluid receiving container. In practical applications, this is particularly sensible when the fluid receiving container is not used. In its collapsed state, the fluid receiving container can be pushed or placed into a compartment of the trolley housing. In this case, the above-described joint or joint mechanism may be used such that a mechanical connection can be maintained. For example, the joint or the joint mechanism may be designed for pivoting the fluid receiving container into the compartment. In its collapsed state, the fluid receiving container can also be stored at a different location in a particularly space-saving fashion. Furthermore, the vehicle may carry along multiple fluid receiving containers, wherein each fluid container is used for collecting fluid only once. This improves the hygiene during the use of the fluid receiving container. Previously used fluid receiving containers can be cleaned after the end of a journey in order to be reused.

Another advantageous embodiment of the fluid receiving container is characterized in that a fluid receiving bag is suspended in the interior of the fluid receiving container. The fluid receiving bag may be realized in the form of a bag or a sack of sorts. In this case, a port is integrated into the fluid receiving bag and may be coupled to the container suction port such that fluid may be extracted from the interior of the fluid receiving bag by means of the container suction port. An at least indirect extraction of fluid from the interior of the fluid receiving container thereby also takes place. The above-described aspects, advantages and effects therefore apply analogously to this embodiment. After the fluid receiving bag has been used, it may be replaced with a new fluid receiving bag such that the hygiene is improved.

The cabin monument comprises a cabin docking station, wherein a fluid receiving container may be detachably coupled by means of an associated coupling unit to the cabin docking station. The fluid receiving container comprises an upper container opening. The fluid receiving container furthermore comprises a container suction port, by means of which a fluidic connection may be provided in order to extract a fluid from the bottom section of the interior of the fluid receiving container. The cabin docking station comprises a station suction port, wherein the container suction port and the station suction port of the cabin docking station are realized in such a way that a fluidic connection between the container suction port and the station suction port of the cabin docking station is produced when the fluid receiving container is coupled by means of the associated coupling unit to the cabin docking station.

With respect to the fluid receiving container, analogously reference is made to the preceding explanations, advantages and effects of the fluid receiving container described in connection with the trolley.

With respect to the station suction port of the cabin docking station, analogously reference is made to the station suction port of the housing docking station. Analogous characteristics, advantages and effects therefore also apply, insofar as sensible, to the station suction port of the cabin docking station. However, the station suction port is in this case not assigned to the housing docking station, but rather to the cabin docking station. The cabin docking station may, insofar as sensible, be realized analogous to the housing docking station. The cabin docking station may be permanently connected to the cabin monument, particularly to a horizontal plate of the cabin monument. The cabin monument may be realized in the form of a cabinet of sorts. In this way, the cabin docking station may be arranged, for example, on a horizontal plate of the cabin monument. The cabin docking station and the fluid receiving container may comprise correspondingly designed connecting elements in order to detachably couple the fluid receiving container to the cabin docking station. A mechanical connection, particularly a positive and/or non-positive connection, may thereby be produced. The connecting elements may be at least partially formed by the station suction port of the cabin docking station and by the container suction port of the fluid receiving container.

An advantageous embodiment of the system is characterized in that the fluid receiving container is coupled by means of the associated coupling unit to the cabin docking station. A fluidic connection is produced by coupling the container suction port of the fluid receiving container to the station suction port of the cabin docking station. The fluid receiving container may be coupled to the cabin docking station or as well as to a housing docking station of the trolley housing. For example, if the fluid receiving container is initially coupled to the housing docking station of the trolley housing in order to collect fluid in the interior of the fluid receiving container by means of the trolley, the fluid receiving container may be detached from the housing docking station after the fluid has been collected in order to be subsequently coupled to the cabin docking station. In this case, a fluidic connection between the container suction port and the station suction port of the cabin docking station is produced. The station suction port of the cabin docking station is preferably connected to a vacuum source of the vehicle such that the fluid is extracted from the interior of the fluid receiving container. The vacuum source may comprise, for example, a vacuum pump. Due to the above-described procedure, the fluid receiving container may be very easily handled and simultaneously serves for separately collecting fluid by means of the trolley. The disposal may likewise be realized very easily by coupling the fluid receiving container to the cabin docking station. All in all, the collection and the disposal of liquid waste are thereby simplified.

An advantageous embodiment of the system is characterized in that the fluid receiving container comprises a container pressure port, by means of which rinsing fluid may be filled into the interior of the fluid receiving container, wherein the cabin docking station comprises a station pressure port, and wherein the container pressure port and the station pressure port of the cabin docking station are realized in such a way that a fluidic connection between the container pressure port and the station pressure port of the cabin docking station is produced when the fluid receiving container is coupled by means of the associated coupling unit to the cabin docking station.

With respect to the station pressure port of the cabin docking station, analogously reference is made to the station pressure port of the housing docking station, wherein corresponding embodiments, characteristics, advantages and/or effects also apply, insofar as sensible, to the station pressure port of the cabin docking station. When the fluid container is coupled to the cabin docking station, a fluidic connection is consequently produced between the container pressure port and the station pressure port of the cabin docking station such that rinsing fluid may be respectively conveyed or sprayed into the interior of the fluid receiving container via this fluidic connection in order to clean said interior. For this purpose, the station pressure port of the cabin docking station may be connected to a rinsing fluid source, particularly of the vehicle, in order to respectively convey or spray the rinsing fluid into the interior of the fluid receiving container. The rinsing fluid source may comprise a pump for conveying rinsing fluid. The fluid receiving container may be cleaned after each use for collecting fluids in order to comply with the applicable hygienic requirements.

The cabin monument comprises a sink, wherein cabin docking station is attached to the sink.

### DESCRIPTION OF THE INVENTION

Other characteristics, advantages and potential applications of the present invention may be gathered from the following description of exemplary embodiments and the figures. In this respect, all described and/or graphically illustrated features form the subject of the invention individually and in arbitrary combination, namely regardless of their composition in the individual claims or their references to other claims. In the figures, identical or similar objects are furthermore identified by the same reference symbols.
- Figure 1: shows an embodiment of the trolley in the form of a schematic perspective view.
- Figure 2: shows another embodiment of a section of the trolley in the form of a schematic perspective view.
- Figure 3: shows an embodiment of a rear wall of the fluid receiving container in the form of a schematic view.
- Figure 4: shows an embodiment of the housing docking station in the form of a schematic top view.
- Figure 5: shows another embodiment of the bottom of the fluid receiving container in the form of a schematic view.
- Figure 6: shows an embodiment of the cabin monument in the form of a schematic perspective view.
- Figure 7: shows another embodiment of the trolley in the form of a schematic side view.
- Figure 8: shows an embodiment of the fluid receiving container in the form of a schematic perspective view.
- Figure 9: shows an example not being part of the present invention in the form of a schematic sectional view.
- Figure 10: shows an example not being part of the present invention in the form of a schematic sectional view.
- Figure 11: shows another embodiment of the cabin monument in the form of a schematic perspective view.
- Figure 12: shows an embodiment of the station docking station in the form of a schematic top view.
- Figure 13: shows another embodiment of the cabin monument in the form of a schematic perspective view.
- Figure 14: shows the cabin monument of Fig. 13 in a more detailed view.
- Figure 15: shows another embodiment of the cabin monument in the form of a schematic perspective view.
- Figure 16: shows the cabin monument of Fig. 15 in a more detailed view.

### DETAILED DESCRIPTION OF EXEMPLARY EMBODIMENTS

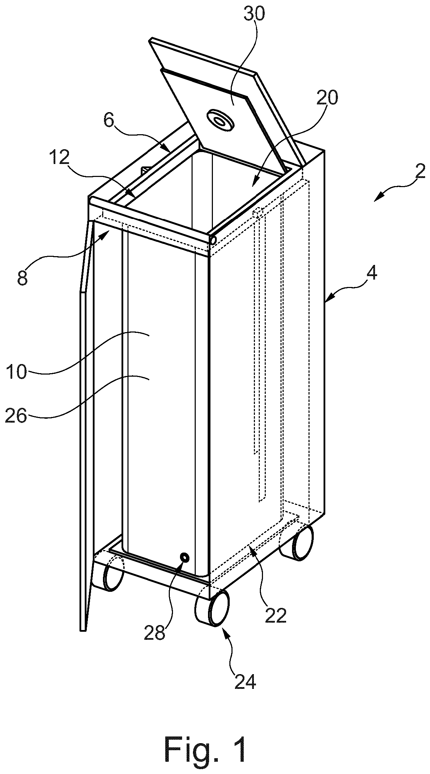

Figure 1 shows a trolley 2. The trolley 2 serves for collecting waste products in a vehicle. The vehicle is preferably an aircraft. The trolley 2 comprises a trolley housing 4 with an upper housing opening 6. The trolley 2 may be realized in the form of a so-called full-size trolley or half-size trolley in this case. In order to collect waste products, the trolley 2 may be pushed through a cabin aisle of the aircraft such that the cabin crew may accept waste products from the aircraft passengers and collect these waste products in the trolley. Practical experience has shown that the waste products essentially consist of solid waste and liquid waste. In order to simplify the disposal of the liquid waste such as, for example, the remains of beverages from cans or bottles, it is proposed to collect the liquid waste separately of the solid waste. A waste enclosure 10 is suspended in the housing interior 8 of the trolley housing 4 in order to receive solid waste that, however, may also contain small quantities of liquid waste. The waste enclosure 10 is preferably realized in the form of a plastic waste enclosure. According to Figure 1, the waste enclosure 10 extends from an associated upper enclosure opening 12 to a bottom 22 of the waste enclosure 10. A wall 26 of the waste enclosure 10 extends between the bottom 22 of the waste enclosure 10 and the upper enclosure opening 12. The waste enclosure 10 may therefore form a trash bag. Alternatively, a (not-shown) trash bag may be suspended in the waste enclosure 10. In this case, the trash bag may be exchanged. If solid waste is collected in the trash bag, it is ensured that the waste enclosure 10 does not come in contact with the solid waste and therefore is also not soiled. The exchangeable trash bag therefore may be removed from the waste enclosure 10 as needed and stored separately such that the trolley with the waste enclosure 10 may be used for collecting additional solid waste once a new trash bag is suspended in the waste enclosure 10.

The enclosure opening 12 of the waste enclosure 10 and the housing opening 6 of the trolley housing 4 are arranged relative to one another in such a way that waste products may be introduced through the housing opening 6 and the enclosure opening 12. If the waste enclosure 10 itself serves for receiving waste products, particularly solid waste, the waste products are directly introduced into the interior 20 of the waste enclosure 10. However, if a trash bag is suspended in the waste enclosure 10, this trash bag likewise comprises a bag opening that is detachably fastened on the enclosure opening 12 and/or on a section of the waste enclosure 10 arranged adjacent thereto. This ensures that the bag opening, the enclosure opening 12 and the housing opening 6 are arranged relative to one another in such a way that waste products, particularly solid waste, may be introduced into an interior of the trash bag through the housing opening 6, the enclosure opening 12 and the bag opening.

The trolley 2 comprises rollers 24 on an associated underside of the trolley housing 4 in order to collect waste products from a plurality of passengers and/or at different locations in the aircraft. The trolley 2 is therefore preferably realized in the form of a rolling trolley 2. Consequently, the trolley 2 may be realized in the form of a cart and/or rolling cart of sorts.

Once the waste enclosure 10 and/or a trash bag suspended therein is filled with at least essentially solid waste by the cabin crew, practical experience has shown that this waste frequently does not have a high volumetric density. For example, the solid waste also may be at least partially formed, for example, by beverage cans or beverage cartons, as well as cartons for the prior storage of foods. Waste products of this type may be respectively compacted or compressed by extracting air from the trash bag or from the waste enclosure 10. This is achieved in that the waste enclosure 10 and/or the trash bag may be at least partially deformable. For example, the sidewalls 26 of the waste enclosure 10 and/or the sidewalls of the trash bag may be deformable. A suction port 28 may be furthermore integrated into a sidewall 26 and/or into a bottom 22 of the waste enclosure 10 in order to extract fluid, particularly air, from an interior 20 of the waste enclosure 10. The enclosure opening 12 may be sealed in a fluid-tight fashion by means of a cover 30 in order to achieve the compaction of the waste enclosure 10 due to the extraction of fluid or air, respectively. The cover 30 may be assigned to the waste enclosure 10. Alternatively, the cover 30 may be realized in the form of a separate cover. The cover 30 may be integrally connectable to the enclosure opening 12 such that a sealed enclosure can be formed around the interior 20. Once the interior 20 is thusly sealed with the exception of the suction port 28, compaction of the waste enclosure 10 is achieved due to the extraction of fluid or air from the interior 20, wherein the cover 30 and the waste enclosure 10 are at least essentially realized in a fluid-tight fashion. The suction port 28 may be at least indirectly connected to another port, particularly a vacuum source. Additional means such as, for example, a fluid line and/or other line elements for the extraction of fluid may be provided for this purpose. The suction port 28 may furthermore be realized in the form of a check valve that allows a volumetric flow from the interior 20 of the waste enclosure 10 and blocks a volumetric flow in the opposite direction. Due to the utilization of such a check valve, it may be ensured that the waste enclosure 10 also maintains the corresponding compact shape after the compaction and therefore may be handled in a particularly space-saving and/or simple fashion.

If a trash bag is suspended in the waste enclosure 10, this trash bag may analogously comprise the above-described features of the waste enclosure 10. A suction port of the trash bag may be connected to the suction port 28 of the waste enclosure 10 in such a way that air and/or a fluid may be extracted from the interior of the trash bag. Alternatively, the trash bag may not comprise a suction port. In this case, the trash bag is compressed due to the compaction of the waste enclosure 10 and thereby also compacted. After the compaction, the trash bag may be removed from the waste enclosure 10 and stored at a location provided for this purpose. Alternatively, the waste enclosure may be expanded again after the compaction such that the compacted waste remains in a bottom region of the trash bag and additional waste products may be collected. In this way, the respective storage capacity of the trash bag or the waste enclosure 10 maybe increased.

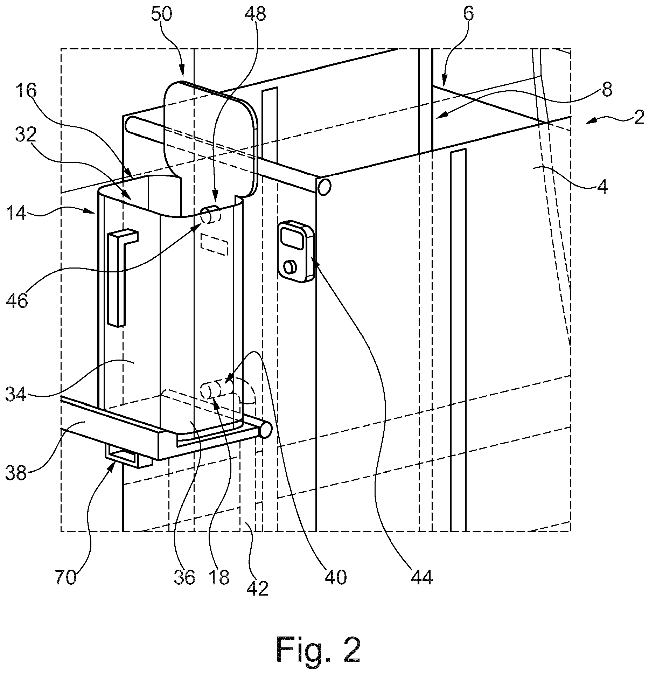

The trolley 2 furthermore comprises a fluid receiving container 14. A section of the trolley 2 with the fluid receiving container 14 is schematically illustrated in Figure 2. The fluid receiving container 14 comprises an upper container opening 16. Fluid may be introduced into an interior 32 of the fluid container 14 through the upper container opening 16. The interior 32 is bounded by sidewalls 34 of the fluid receiving container 14. The fluid receiving container 14 may furthermore comprise a bottom 36. The sidewalls 34 preferably extend from the container opening 16 to the bottom 36 of the fluid receiving container 14. The bottom 36 of the fluid receiving container 14 is also referred to as container bottom 36. This applies accordingly to the sidewalls 34, which may be referred to as container sidewalls 34. The container sidewalls 34 and the container bottom 36 are realized in a fluid-tight fashion such that fluid is prevented from escaping from the interior 32 of the fluid receiving container 14 unobstructedly.

According to Figure 2, the fluid receiving container 14 is preferably arranged laterally on the trolley housing 4. The fluid receiving container 14 may alternatively be arranged in the trolley housing 4. In order to arrange the fluid receiving container 14 laterally on the trolley housing 4, the trolley housing 4 preferably comprises a housing docking station 38 exemplarily of the type illustrated in Figure 2. The housing docking station 38 may be realized in the form of a rigid plate of sorts. The fluid receiving container 14 is respectively placed or positioned on the housing docking station 38. The fluid receiving container 14 is thereby arranged laterally of the remaining trolley housing 4. In order to securely hold the fluid receiving container 14 on the docking station 38, the fluid receiving container 14 comprises a coupling unit, by means of which the fluid receiving container 14 may be detachably coupled to the housing docking station 38. The housing docking station 38 may comprise elements, which are designed corresponding to the coupling unit 54 of the fluid receiving container 14, in order to produce a positive and/or non-positive connection between the housing docking station 38 and the fluid receiving container 14. In a positive connection, in particular, the fluid receiving container 14 is detachably connected to the trolley housing 4, particularly to the associated housing docking station 38.

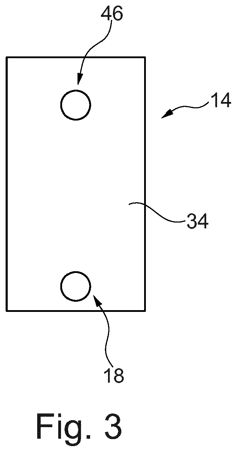

It is furthermore proposed that the fluid receiving container 14 comprises a container suction port 18. The container suction port 18 is preferably integrated into a container sidewall 34. However, the container suction port 18 may in principle also be integrated into the container bottom 36 of the fluid receiving container 14. Figure 3 shows a rear container sidewall 34. The container suction port 18 is integrated into the rear container sidewall 34. In this case, the container suction port 18 is arranged in a bottom end section of the container sidewall 34 in such a way that a fluidic connection with the bottom section of the interior 32 of the fluid receiving container 14 is produced by means of the container suction port 18. Consequently, the container suction port 18 serves for producing a fluidic connection in order to extract a fluid from the bottom section of the interior 32 of the fluid receiving container 14.

The container suction port 18 is preferably realized in the form of an automatically closing or switchable check valve. If the container suction port 18 is realized in the form of an automatically closing check valve, the valve is closed as long as a minimum differential pressure between the interior 32 of the fluid receiving container 14 and an outer end of the check valve is not reached. The minimum differential pressure is chosen in such a way that the valve does not open when the interior 32 of the fluid receiving container 14 is filled with fluid. However, the check valve may be opened by applying a sufficient vacuum for exceeding the minimum differential pressure to the outlet of the check valve. In this case, the check valve opens such that fluid may be extracted from the interior 32 of the fluid receiving container 14 through the container suction port 18. In order to respectively apply the aforementioned vacuum to the outlet of the container suction port 18 or the check valve, the container suction port 18 may be detachably coupled to a first coupling port 40 of the trolley housing 4 in order to produce a fluidic connection between the container suction port 18 and the first coupling port 40. The first coupling port 40 may furthermore be connected to a fluid line 42 such that a fluidic connection with a vacuum source, particularly with a pump, may be produced in order to extract fluid from the interior 32 of the fluid receiving container 14. The detachable fluidic connection between the container suction port 18 and the first coupling port 40 may be automatically produced when the fluid receiving container 14 is placed on the housing docking station 38. The extraction of fluid from the interior 32 of the fluid receiving container 14 may be activated by means of a control element 44. When the control element 44 is actuated, a vacuum is applied to the container suction port 18 in order to open the check valve, if applicable, such that the fluid may flow from the interior 32 through the container suction port and the other above-described elements.

According to the exemplary embodiment illustrated in Figure 2, the fluid receiving container 14 may protrude over the remaining trolley housing 4 due to its lateral arrangement on the trolley housing 4. If this should be avoided, for example, when the trolley 2 is pushed into an assigned parking space or when the fluid receiving container 14 is not needed, it proved advantageous to realize the housing docking station 38 such that it may be laterally pivoted into the trolley housing 4 or retracted into the trolley housing 4. It is accordingly proposed that the housing docking station 38 respectively may be laterally extended from the trolley housing 4 or laterally pivoted out of the trolley housing 4. When the housing docking station 38 is respectively extended or pivoted out, the fluid receiving container 14 may once again be placed thereon in order to resume the above-described use of the fluid receiving container 14.

A handle 70 may be assigned to the housing docking station 38 in order to respectively extend and/or retract the housing docking station or pivot the housing docking station 38 in and/or out, wherein said handle is also externally accessible in a retracted state or in an inwardly pivoted state of the housing docking station 38.

Once fluid has been extracted from the interior 32 of the fluid receiving container 14, the fluid container 14 basically is once again available for collecting liquid waste. According to practical experience, however, it is preferable to previously clean the interior 32 of the fluid receiving container 14. For this purpose, the fluid receiving container 14 may comprise a container pressure port 46. The container pressure port 46 is integrated into the container sidewall 34 or into the container bottom 36. The container pressure port 46 is designed for filling rinsing fluid into the interior 32 of the fluid receiving container 14. On the side facing the interior 32, the container pressure port 46 may be realized in the form of a nozzle of sorts such that the rinsing fluid may be sprayed into the interior 32. This simplifies the cleaning of the interior 32 of the fluid receiving container 14. The container pressure port 46 may furthermore be realized in the form of a check valve of sorts, which allows a fluid flow into the interior 32 of the fluid receiving container 14 and blocks an opposite fluid flow. This ensures that liquid waste does not escape from the interior 32 of the fluid receiving container 14 unobstructedly.

In Figure 3, the rear container wall 34 is also illustrated with the container pressure port 46. The container pressure port 46 is preferably arranged in an upper end section of the container wall 34. The trolley 4 may comprise a second coupling port 48 in order to convey rinsing fluid to the container pressure port 46. The second coupling port 48 is preferably arranged on the trolley housing 4 in such a way that a fluidic connection between the container pressure port 46 and the second coupling port 48 is produced when the fluid receiving container 14 is respectively positioned or placed on the housing docking station 38. The second coupling port 48 may be coupled to a rinsing fluid pressure source, particularly with the aid of additional lines and/or elements, such that rinsing fluid may be conveyed to the container pressure port 46 and into the interior 32 of the fluid receiving container 14 through this container pressure port. This is carried out after fluid has been extracted from the interior 32 of the fluid receiving container 14 in order to reuse this fluid receiving container for collecting additional liquid waste. After the cleaning process, the rinsing fluid may be extracted by means of the container suction port 18 such that the cleaned fluid receiving container 14 is available for further use. This improves the hygiene during the use of the fluid receiving container 14.

The fluid receiving container 14 comprises a container cover 50. The container cover 50 is hinged on the container sidewall 34. The container cover 50 makes it possible to close the container opening 16, particularly in a fluid-tight fashion. On the one hand, this prevents liquid waste from accidentally and/or unobstructedly escaping from the interior 32 of the fluid receiving container 14. On the other hand, the container cover 50 prevents rinsing fluid from accidentally splashing out of the interior 32 during the cleaning process.

It was mentioned above with reference to Figures 2 and 3 that the container suction port 18 and/or the container pressure port 46 may be arranged on a rear sidewall 34. However, this arrangement is not imperative. In fact, the container suction port 18 and/or the container pressure port 46 may be respectively arranged on a different sidewall 34 and/or on the container bottom 36.

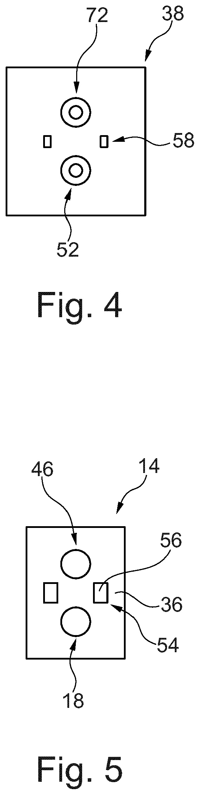

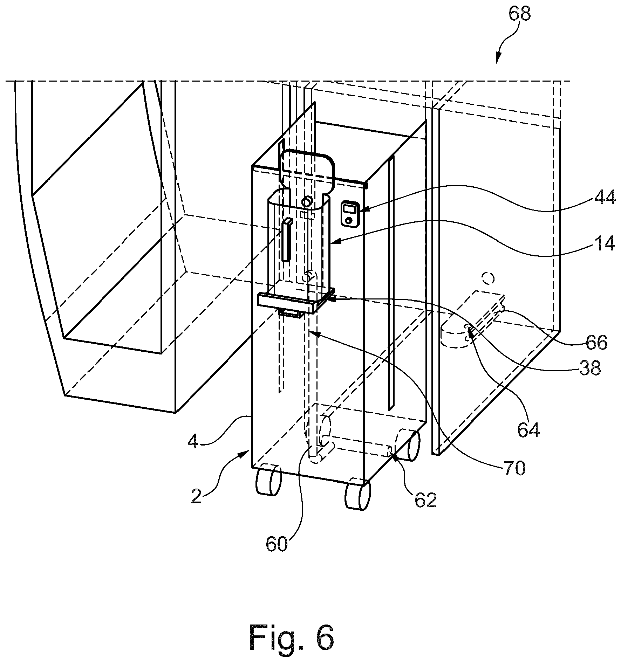

An arrangement of ports is schematically illustrated in Figures 4 and 5. Figure 4 shows the housing docking station 38 in the form of a schematic top view. The housing docking station 38 comprises a station suction port 52 on its upper side. The underside of the container bottom 36 of the fluid receiving container 14 is illustrated in Figure 5. In this case, the container suction port 18 is integrated into the container bottom 36. A coupling unit 54 is furthermore arranged on the container bottom 36. The coupling unit 54 may be formed by cavities 56 in the container bottom 36. The coupling unit 54 is preferably provided with two or more cavities 56 as illustrated in Figure 5. The housing docking station 38 comprises at least one coupling element 58, preferably two or more coupling elements 58 as illustrated in Figure 4, in correspondence with the coupling unit 54. Each coupling element 58 may be realized in the form of a pin of sorts or in the form of a different element that protrudes beyond the upper side of the housing docking station 38. A positive connection between the fluid receiving container 14 and the docking station 38 may be produced by means of the coupling elements 58 and the coupling unit 54. Consequently, the fluid receiving container 14 may be detachably coupled to the housing docking station 38 with the aid of the coupling unit 56, for example, by respectively positioning or placing the fluid receiving container 14 on the upper side of the housing docking station 38. In this case, the fluid receiving container 14 is also correspondingly aligned relative to the docking station 38. The container suction port 18 and the station suction port 52 are furthermore realized in such a way that a fluidic connection between the container suction port 18 and the station suction port 52 of the housing docking station 38 is produced when the fluid receiving container 14 is coupled by means of the associated coupling unit 54 to the housing docking station 38. As a result, the desired fluidic connection between the aforementioned ports 18, 52 is automatically produced when the fluid receiving container 14 is placed on the docking station 38. A fluid line 60 preferably leads from the station suction port 52 to a trolley suction port 62. This is illustrated in an exemplary fashion in Figure 6. The trolley 2 may be connected to another port, particularly a suction port 64 of a docking station 66, by means of the trolley suction port 62, wherein the docking station 66 is assigned to a cabin monument 68 and/or an aircraft such that the trolley suction port 62 may produce a fluidic connection with a vacuum source of the cabin monument 68 or the aircraft in order to at least indirectly vacuum off fluid from the interior 32 of the fluid receiving container 14. The vacuum source may comprise a vacuum pump. The extraction of the fluid may be activated by means of the control element 44. For this purpose, the control element 44 may establish, for example, a telemetric connection with an extraction control, particularly the vacuum source, in order to start or stop the extraction.

With respect to the control, it found advantageous if the extraction of the fluid from the fluid receiving container 14 and/or the cleaning of the interior 32 of the fluid receiving container 14 may only take place when it is ensured that the fluid receiving container 14 is coupled to the housing docking station. For this purpose, a sensor may be assigned to the housing docking station 38 and configured to detect the coupling of the fluid receiving container 14. A corresponding sensor signal may be transmitted to a control unit such that the extraction of the fluid from the fluid receiving container 14 and/or the cleaning of the interior 32 of the fluid receiving container 14 may be carried out once the coupling of the fluid receiving container 14 has been detected with the aid of the sensor. If this is the case, a corresponding signal may be optically displayed, for example, with a display element. At this point, the above-described sequence may be initiated by transmitting a signal for extracting the fluid from the fluid receiving container 14 and/or for cleaning the interior 32 of the fluid receiving container 14 to the control unit by means of the control element 44. In this context, corresponding valves and/or a pump may be controlled such that the extraction or the cleaning process is respectively activated. The control unit, the valves and/or the pump may be assigned to the trolley, the housing docking station 38 and/or a cabin monument 68 as illustrated in an exemplary fashion in Figure 6.

Figure 4 furthermore shows that the housing docking station 38 comprises a station pressure port 72. The station pressure port 72 is arranged on the upper side of the housing docking station 38. Figure 5 furthermore shows that the container pressure port 46 is integrated into the container bottom 36. In this case, the container pressure port 46 and the station pressure port 72 are arranged and/or realized in such a way that a fluidic connection between the container pressure port 46 and the station pressure port 72 of the housing docking station 38 is produced when the fluid receiving container 14 is coupled to the housing docking station 38 by means of the associated coupling unit 54.

The aforementioned fluidic connection between the container pressure port 46 and the station pressure port 72 of the housing docking station 38 is therefore automatically produced when the fluid receiving container 14 is placed on the housing docking station 38.

The trolley 2 may furthermore comprise a (not-shown) trolley pressure port that is connected to the station pressure port 72 of the housing docking station 38 by means of another fluid line in order to produce a corresponding fluidic connection. The trolley pressure port may be designed and serve for being coupled to an additional port of the docking station 66 in order to produce a corresponding fluidic connection for supplying rinsing fluid. For this purpose, the cabin monument 68 and/or the aircraft may comprise a corresponding fluid pressure source in order to convey rinsing fluid into the interior 32 of the fluid receiving container 14 by means of the above-described elements and fluidic connections. The rinsing process of the interior 32 of the fluid receiving container 14 may likewise be started and/or stopped by means of the control element 44. According to Figure 6, the control element 44 is preferably assigned to the trolley 2. However, the control element 44 may alternatively or additionally also be assigned to the cabin monument 68 and/or the aircraft.

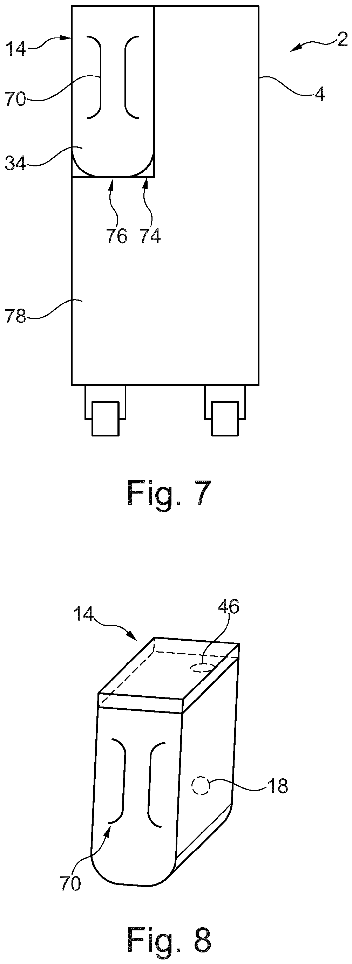

Another embodiment of the trolley 2 is schematically illustrated in Figure 7. The trolley comprises a recess 74 on an end section on the side of the housing opening. The recess 74 is realized in such a way that it may accommodate the fluid receiving container 14. The recess 74 is preferably defined by walls of the trolley housing 4 such that the fluid receiving container 14 may be respectively arranged or fastened detachably and laterally on the trolley housing 4. For this purpose, the trolley housing 4 and the fluid receiving container 14 may comprise correspondingly designed connecting elements. Furthermore, analogously reference is made to the preceding explanations in connection with Figures 2, 3 and 6, wherein the fluid receiving container 14 is presently not held by a separate housing docking station 38, but rather by the trolley housing 4 itself in the region of the recess 74. The trolley housing may therefore comprise corresponding walls 76, which are designed for holding the fluid receiving container 14, in the region of the recess 74. In this embodiment, the first coupling port 40 and/or the second coupling port 48 may also be assigned to the trolley housing in order to respectively produce a fluidic connection with the container suction port 18 or the container pressure port 46. A correspondingly designed fluid receiving container 14 is illustrated in Figure 7. This fluid receiving container comprises a handle 70 on the front side. The container suction port 18 and the container pressure port 46 are arranged on the rear side. When the fluid receiving container 14 is inserted into the recess 74 of the trolley housing 4, it is preferred that at least one container sidewall 34 of the fluid receiving container 14 is aligned flush with a sidewall 78 of the trolley housing 4. At least two container sidewalls 34 of the fluid receiving container 14 preferably are respectively aligned flush with one of the sidewalls 78 of the trolley housing 4. In this way, the trolley may still have the external dimensions of a standardized trolley, particularly a full-size trolley or a half-size trolley.

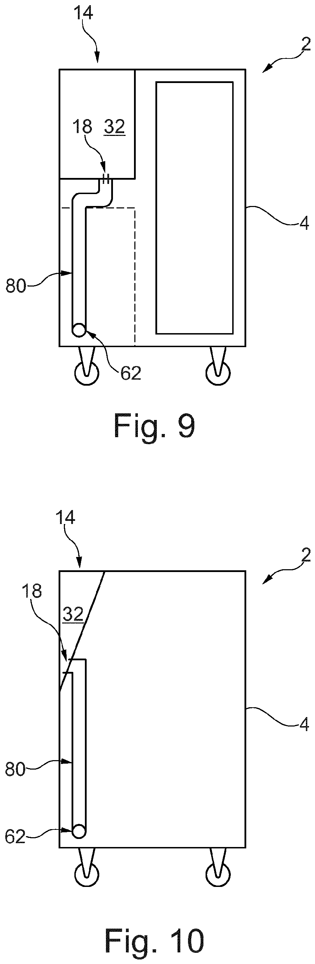

An example not being part of the present invention is schematically illustrated in Figure 9. Insofar as sensible, analogously reference is made to the preceding explanations. However, the trolley 2 illustrated in Figure 9 may be distinguished in that the fluid receiving container 14 is permanently connected to the trolley housing 4. For this purpose, the fluid receiving container 14 may be laterally integrated into the trolley housing 4. The fluid receiving container 14 may also be realized in the form of a module. It furthermore proved advantageous if the container suction port 18 is directly connected to a fluid line 80 that produces a fluidic connection between the container suction port 18 and the trolley suction port 62. The fluid receiving container 14 may have a rectangular cross section as illustrated, for example, in Figure 9. However, the fluid receiving container 14 may also have a different cross section. Figure 10 shows an example of a fluid container 14 with a triangular cross section. The illustration of other elements of the trolley 2 was omitted in Figures 9 and 10 in order to provide a better overview.

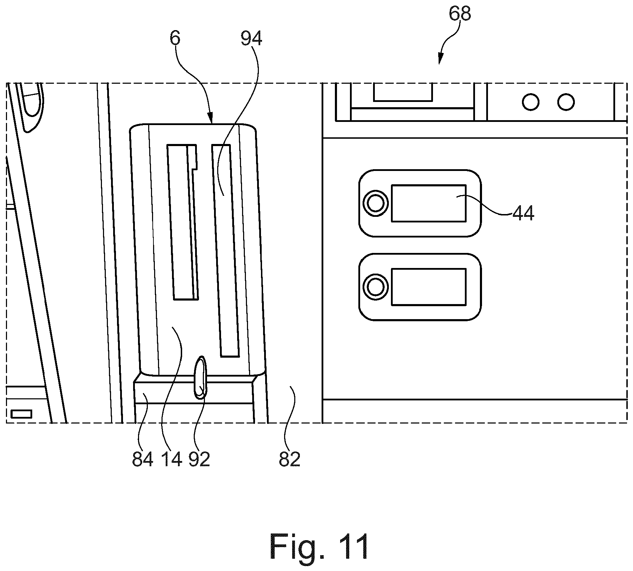

Figure 11 schematically shows part of a cabin monument 68 for a vehicle, particularly an aircraft. The cabin monument 68 preferably is at least partially realized in the form of a cabinet of sorts. For example, the cabin monument 68 may comprise a compartment or a drawer with a bottom plate 82. The cabin monument 68 furthermore comprises a cabin docking station 84 that is preferably arranged on the bottom plate 82. The cabin docking station 84 is realized in such a way that a fluid receiving container 14 may be detachably coupled by means of an associated coupling unit 54 to the cabin docking station 81. The cabin docking station 84 therefore serves for coupling the fluid receiving container 14 thereto. With respect to the fluid receiving container 14, reference is made, insofar as sensible, to the preceding explanations of the fluid receiving container 14. This reference furthermore also applies mutually. The fluid receiving container 14 therefore comprises an upper container opening 6. A container suction port 18 is furthermore provided for the fluid receiving container 14. The arrangement of the container suction port 18 in the bottom 36 of the fluid receiving container 14 was already explained above with reference to Figure 5. Therefore, reference is made once again to the corresponding explanations in connection with Figures 4 and 5 at this point. The container suction port 18 is therefore designed for producing a fluidic connection for extracting a fluid from the bottom of the interior 32 of the fluid receiving container 14.

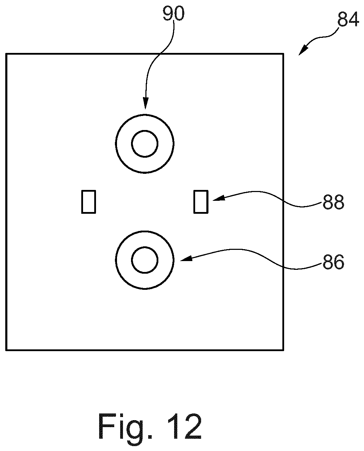

The cabin docking station 84 is realized analogous to the housing docking station 38. With respect to the cabin docking station 84, analogous reference is therefore made, insofar as sensible, to the explanations of the housing docking station 38, particularly in connection with Figure 4. The cabin docking station 84 is illustrated in the form of a top view in Figure 12. The synopsis of Figures 4 and 12 already reveals that the cabin docking station 84 also comprises the other preferred features explained above with reference to the housing docking station 38. The cabin docking station 84 comprises a station suction port 86. The container suction port 18 and the station suction port 86 of the cabin docking station 84 are realized in such a way that a fluidic connection between the container suction port 18 and the station suction port 86 of the cabin docking station 84 is produced when the fluid receiving container 14 is coupled by means of the associated coupling unit 56 to the cabin docking station 84. In order to produce this coupling, the cabin docking station 84 comprises coupling elements 88 that are designed for producing a positive connection with the coupling unit 56 of the fluid receiving container 14. The coupling may therefore be produced analogous to the coupling explained above in connection with the housing docking station 38 and the fluid receiving container 14.

It is furthermore proposed that the fluid receiving container 14 comprises a container pressure port 46 of the type analogously described above with reference to Figure 5. The container pressure port 46 makes it possible to fill or spray rinsing fluid into the interior of the fluid receiving container 14. Furthermore, the cabin docking station 84 preferably comprises a station pressure port 90, wherein the container pressure port 46 and the station pressure port 90 of the cabin docking station 84 are realized in such a way that a fluidic connection between the container pressure port 46 and the station pressure port 90 of the cabin docking station 84 is produced when the fluid receiving container 14 is coupled by means of the associated coupling unit 56 to the cabin docking station 84. In this respect, we once again analogously refer to the preceding explanations of the fluidic connection, which is analogously produced between the station pressure port 72 of the housing docking station 38 and the container pressure port 46.

With respect to the control, it found advantageous if the extraction of the fluid from the fluid receiving container 14 and/or the cleaning of the interior 32 of the fluid receiving container 14 may only take place when it is ensured that the fluid receiving container 14 is coupled to the cabin docking station 84. For this purpose, a sensor may be assigned to the cabin docking station 84 in order to detect the coupling of the fluid receiving container 14. A corresponding sensor signal may be transmitted to a control unit such that the extraction of the fluid from the fluid receiving container 14 and/or the cleaning of the interior 32 of the fluid receiving container 14 may be carried out once the coupling of the fluid receiving container 14 has been detected with the aid of the sensor. If this is the case, a corresponding signal may be optically displayed, for example, with a display element. The above-described sequence may be initiated by transmitting a signal for extracting the fluid from the fluid receiving container 14 and/or for cleaning the interior 32 of the fluid receiving container 14 to the control unit by means of the control element 44 assigned to the cabin monument 68. In this context, corresponding valves and/or a pump may be controlled such that the extraction or the cleaning process is respectively activated. The control unit, the valves and/or the pump may be assigned to the cabin docking station 84, the cabin monument 68 and/or the vehicle.

Figure 11 moreover shows that a fluid-tight window may be integrated into one of the lateral walls 34 of the fluid container 14 such that the filling level of the fluid container 14 is visible. Otherwise, the sidewalls 34 may be realized opaquely.

A locking mechanism may furthermore be assigned to the cabin docking station 84 configured to lock a connection between the fluid receiving container 14 and the cabin docking station 84. In this case, a lever 92 may be provided in order to activate or deactivate the locking mechanism. A corresponding locking mechanism may also be provided for the housing docking station 38.

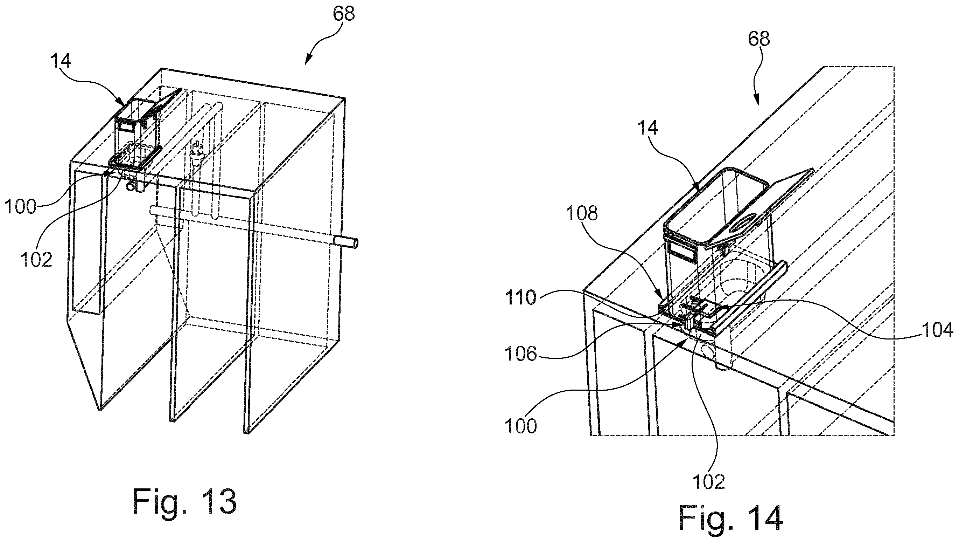

Fig. 13 schematically illustrates a cabin monument 68. The cabin monument 68 comprises a sink 100. Further, the cabin docking station 84 is attached to the sink 100. During the coupling or decoupling of the fluid receiving container 14 with/form the cabin docking station 84, it may occur that a small quantity of fluid escapes from the container suction port 18 and/or the container pressure port 46. For collecting this fluid, the sink 100 may act as a drip pan. As an effect, the disposal of this fluid can be ensured. Further, a hygienic cleaning of the cabin docking station 84 is facilitated, as cleaners may not leak to the exterior of the sink, but may also be collected via the sink 100.

The cabin monument 68 is configured as a galley cabin monument. The sink 100 preferably comprises a concave wall 102 extending to an upper edge region of the sink 100, wherein the upper edge region surrounds an upper opening of the sink 100. The wall 102 of the sink 10 preferably defines an intake space, in particular such that a fluid can be poured into the intake space via the upper opening of the sink 100. Further, the sink 100 may comprise an orifice integrated in the wall 102, wherein the orifice may at least indirectly be connected to a vacuum source.

In an example, the cabin docking station 84 is arranged at least partly within the intake space and/or attached at least indirectly to the wall 102 of the sink 100, in particular via struts extending from the wall 102 to the cabin docking station 84. Alternatively or additionally, the cabin docking station 84 may be at least partly formed together with the wall 102 of the sink 100. Thus, the cabin docking station 84 and the wall 102 of the sink 100 may be integrally designed. In a further example, the station suction port 86 projects above the upper opening of the sink 100. The station pressure port 90 may also project above the upper opening of the sink. As a result, a respective coupling procedure may be facilitated. The cabin docking station 84 attached to the sink 100 may be arranged, such that a fluidic connection between the container suction port 18 and the station suction port 86 of the cabin docking station 84 is produced when the fluid receiving container 14 is attached to the sink 100, resulting in a coupling of the container suction port 18 and/or the container pressure port 46 to the cabin docking station 84. If the container suction port 18 is connected to the cabin docking station 84, at least an indirect connection to a or the vacuum source may be established. As a result, a vacuum may be applied to the interior 32 of the fluid receiving container 14.

Fig. 14 exemplarily illustrates the cabin monument 68 shown in Fig. 13 in a more detailed view. The container suction port 18 of the fluid receiving container 14 may comprise a valve 104. The valve 104 may be configured to close or open the fluidic connection, which may be provided by the container suction port 18. Further, the valve 104 may be configured to be controlled via a lever 106. The lever 106 may be arranged to be manually operated, if the fluid receiving container 14 is removably attached to the sink 100.

In an example, the upper edge region of the sink 100 forms two parallel extending rails 108. Further, the fluid receiving container 14 may comprise laterally extending protrusions 110 at opposite sides at a bottom region of the fluid receiving container 14. The rails 108 and the protrusions 110 may be formed, such that the protrusions 110 may be slide into the rails 108, respectively, such that a form-fit connection between the fluid receiving container 14 and the sink 100 can be provided. As an effect, the fluid receiving container 14 may be exactly positioned with respect to the sink 100, such that a coupling of the container suction port 18 to the cabin docking station 84 may be ensured.

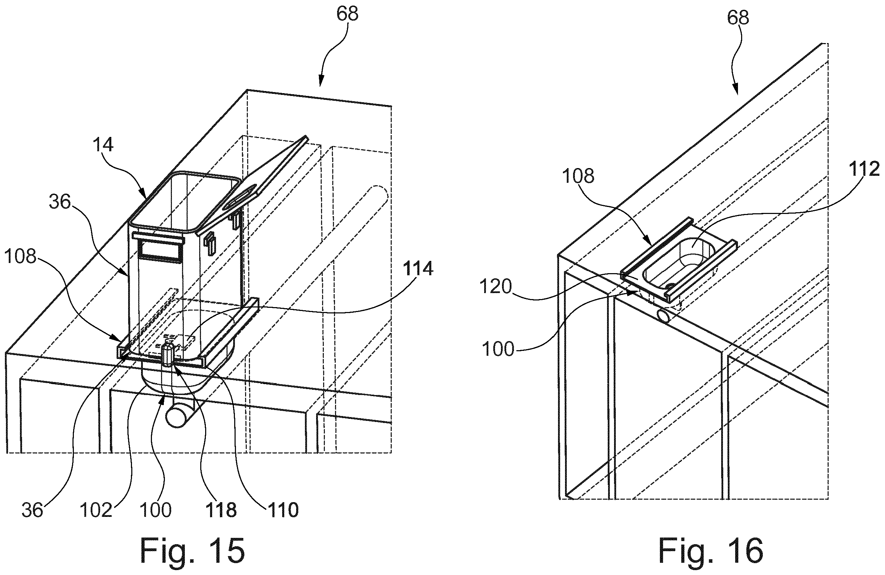

Fig. 15 schematically illustrates a further embodiment of a cabin monument 68 for a vehicle, in particular an aircraft. The cabin monument 68 comprises a sink 100. The sink 100 as such may correspond to the sink 100 as described above. Insofar sensible, analogous reference may be made to the preferred features, preferred effects and/or advantages explained previously with respect to the sink 100 as such.

The sink 100 of the embodiment shown in Fig. 15 and in further detail shown in Fig. 16 comprises an edge region 120 surrounding an upper opening 112 of the sink 100. The cabin monument 68 further comprises a fluid receiving container 14, which may be formed by the fluid receiving container 14 as described before or by another type of fluid receiving container 14. For the sake of simplicity, in the following the term fluid receiving container 14 is used, even though it may relate to either of the previously explained alternatives. The fluid receiving container 14 comprises an upper container opening 16 for introducing liquid waste. The sidewalls 34 and the bottom 36 of the fluid receiving container 14 may be at least basically fluid tight and/or define an interior 32 of the fluid container 14.

The fluid receiving container 14 is detachably coupled to the sink 100, such that the bottom 36 of the fluid receiving container 14 and the edge region 120 of the sink 100 form a fluid tight seal resulting in a sealed space defined by the sink 100 and the bottom 36 of the fluid receiving container 14. For this purpose, the upper edge region 120 of the sink 100 may form two parallel extending rails 108. Further, the fluid receiving container 14 may comprise laterally extending protrusions 110 at opposite sides at a bottom region of the fluid receiving container 14. The rails 108 and the protrusions 110 may be formed, such that the protrusions 110 may be slide into the rails 108, respectively, such that a form-fit connection between the fluid receiving container 14 and the sink 100 can be provided. As an effect, the fluid receiving container 14 may be exactly positioned with respect to the sink 100, such that the fluid tight seal is ensured.

The fluid receiving container 14 comprises a closeable outlet at the bottom 36 of the fluid receiving container 14. The closable outlet 114 may be formed by the container suction port 18. However, the closable outlet 114 may also be of a different type. In an example, the closeable outlet 114 may be formed by a valve 116 being integrated in the bottom 36 of the fluid receiving container 14. The valve 116 may be configured to open or close a fluid path through the bottom 36 of the fluid receiving container 14. Further, the valve 116 may be configured to be controlled via a lever 118. The lever 118 may be arranged to be manually operated.

Further, the sink 100 is configured to be at least indirectly connectable to a vacuum source, such that a vacuum can be caused in the sealed space and applied to the outlet 114 of the fluid receiving container 14. In case liquid waste was previously collected in the interior 32 of the fluid receiving container 14, opening the outlet 114 will result in a suctioning of the liquid waste into the sealed space and/or into the intake space of the sink 100. Said liquid waste may thereafter be vacuumed off via an orifice integrated in a wall 102 of the sink 100. As an effect, the liquid waste cannot sprout out form the sealed space during a discharge of the fluid receiving container 14.

As a supplement, it should be noted that "comprising" does not exclude any other elements or steps, and that "a" or "an" does not exclude a plurality. It should furthermore be noted that features, which were described with reference to one of the above exemplary embodiments, may also be used in combination with other features of other above-described exemplary embodiments. Reference symbols in the claims should not be interpreted in a restrictive sense.

## Claims

1. A system for a vehicle, particularly an aircraft, comprising a trolley (2) for collecting waste products in a vehicle, comprising:
- a trolley housing (4) with an upper housing opening (6) to a housing interior (8) of the trolley housing (4),
- a waste enclosure (10) that is suspended in the housing interior (8) and provided with an upper enclosure opening (12),
wherein the enclosure opening (12) and the housing opening (6) are arranged relative to one another, such that the waste products can be introduced through the housing opening (6) and the enclosure opening (12), wherein the housing opening (6) is closable with a trolley housing cover (30) that is pivotably mounted on the trolley housing (4), wherein waste products can be collected when the trolley housing cover (30) is opened,
wherein the trolley (2) comprises a liquid receiving container (14) for separately collecting liquid waste, the liquid receiving container (14) having an upper container opening (16), which is closable by a container cover (50) and openable to fill in liquid waste,
wherein the liquid receiving container (14) is detachably connected to the trolley housing (4),
wherein the liquid receiving container (14) comprises a container suction port (18), by means of which a fluidic connection can be produced in order to extract a fluid from a bottom section of an interior (32) of the liquid receiving container (14),
the system further comprising a galley cabin monument (68), comprising a sink (100) and a cabin docking station (84) attached to the sink (100) and having a station suction port (86), wherein the liquid receiving container (14) is detachably coupleable by means of an associated coupling unit (54) to the cabin docking station (84), and wherein the station suction port (86) of the cabin docking station (84) is realized in such a way that a fluidic connection between the container suction port (18) and the station suction port (86) of the cabin docking station (84) is produced when the liquid receiving container (14) is coupled by means of the associated coupling unit (54) to the cabin docking station (84).

2. The system according to the preceding claim, **characterized in that** the liquid receiving container (14) comprises a container pressure port (46), by means of which rinsing fluid can be filled into the interior (32) of the liquid receiving container (14).

3. The system according to claim 1 or 2, **characterized in that** the trolley housing (4) comprises a housing docking station (38), wherein the liquid receiving container (14) comprises a coupling unit (54), by means of which the liquid receiving container (14) is detachably coupled to the housing docking station (38), in order to arrange the liquid receiving container (14) in or laterally on the trolley housing (4).

4. The system according to claim 3, **characterized in that** the housing docking station (38) comprises a station suction port (52), and wherein the container suction port (18) and the station suction port (52) are realized in such a way that a fluidic connection between the container suction port (18) and the station suction port (52) of the housing docking station (38) is produced when the liquid receiving container (14) is coupled by means of the associated coupling unit (54) to the housing docking station (38).

5. The system according to one of preceding claims 3 to 4, **characterized in that** the housing docking station (38) comprises a station pressure port (72), wherein the container pressure port (46) and the station pressure port (72) are realized in such a way that a fluidic connection between the container pressure port (46) and the station pressure port (72) of the housing docking station (38) is produced when the liquid receiving container (14) is coupled by means of the associated coupling unit (54) to the housing docking station (38).

6. The system according to one of preceding claims 3 to 5, **characterized in that** the housing docking station (38) is realized such that it can be laterally extended from the trolley housing (4) or laterally pivoted out of the trolley housing (4).

7. The system according to one of preceding claims 2 to 6, cabin docking station (84) comprises a station pressure port (90), and wherein the container pressure port (46) and the station pressure port (90) of the cabin docking station (84) are realized in such a way that a fluidic connection between the container pressure port (46) and the station pressure port (90) of the cabin docking station (84) is produced when the liquid receiving container (14) is coupled by means of the associated coupling unit (54) to the cabin docking station (84).

## Patentansprüche

1. System für ein Fahrzeug, insbesondere ein Flugzeug, mit einem Trolley (2) zum Sammeln von Abfallprodukten in einem Fahrzeug, umfassend:
- ein Trolleygehäuse (4) mit einer oberen Gehäuseöffnung (6) zu einem Gehäuseinnenraum (8) des Trolleygehäuses (4),
- eine Abfallkammer (10), die im Gehäuseinneren (8) aufgehängt und mit einer oberen Kammeröffnung (12) versehen ist,
wobei die Umhüllungsöffnung (12) und die Gehäuseöffnung (6) relativ zueinander angeordnet sind, so dass die Abfallprodukte durch die Gehäuseöffnung (6) und die Umhüllungsöffnung (12) eingebracht werden können, wobei die Gehäuseöffnung (6) mit einer Wagengehäuseabdeckung (30) verschließbar ist, die schwenkbar an dem Wagengehäuse (4) gelagert ist, wobei Abfallprodukte gesammelt werden können, wenn die Wagengehäuseabdeckung (30) geöffnet ist,
wobei der Wagen (2) einen Flüssigkeitsaufnahmebehälter (14) zum getrennten Sammeln von flüssigem Abfall umfasst, wobei der Flüssigkeitsaufnahmebehälter (14) eine obere Behälteröffnung (16) aufweist, die durch einen Behälterdeckel (50) verschließbar ist und zum Einfüllen von flüssigem Abfall geöffnet werden kann,
wobei der Flüssigkeitsaufnahmebehälter (14) lösbar mit dem Wagengehäuse (4) verbunden ist,
wobei der Flüssigkeitsaufnahmebehälter (14) eine Behälteransaugöffnung (18) aufweist, mittels der eine Fluidverbindung hergestellt werden kann, um ein Fluid aus einem Bodenabschnitt eines Innenraums (32) des Flüssigkeitsaufnahmebehälters (14) zu extrahieren,
wobei das System ferner ein Kombüsen-Kabinenmonument (68) umfasst, das ein Spülbecken (100) und eine Kabinen-Andockstation (84) umfasst, die an dem Spülbecken (100) angebracht ist und eine Stations-Saugöffnung (86) aufweist, wobei der Flüssigkeitsaufnahmebehälter (14) mittels einer zugehörigen Kopplungseinheit (54) lösbar mit der Kabinen-Andockstation (84) koppelbar ist, und wobei die Stationsansaugöffnung (86) der Kabinenandockstation (84) derart ausgebildet ist, dass eine fluidische Verbindung zwischen der Behälteransaugöffnung (18) und der Stationsansaugöffnung (86) der Kabinenandockstation (84) hergestellt wird, wenn der Flüssigkeitsaufnahmebehälter (14) mittels der zugehörigen Kopplungseinheit (54) an die Kabinenandockstation (84) angekoppelt wird.

2. System nach dem vorstehenden Anspruch, **dadurch gekennzeichnet, daß** der Flüssigkeitsaufnahmebehälter (14) eine Behälterdrucköffnung (46) aufweist, mittels der Spülflüssigkeit in das Innere (32) des Flüssigkeitsaufnahmebehälters (14) einfüllbar ist.

3. System nach Anspruch 1 oder 2, **dadurch gekennzeichnet, dass** das Wagengehäuse (4) eine Gehäuse-Andockstation (38) aufweist, wobei der Flüssigkeitsaufnahmebehälter (14) eine Kupplungseinheit (54) aufweist, mittels derer der Flüssigkeitsaufnahmebehälter (14) lösbar mit der Gehäuse-Andockstation (38) gekuppelt wird, um den Flüssigkeitsaufnahmebehälter (14) in oder seitlich am Wagengehäuse (4) anzuordnen.

4. System nach Anspruch 3, **dadurch gekennzeichnet, dass** die Gehäuse-Andockstation (38) eine Stations-Ansaugöffnung (52) aufweist, und wobei die Behälter-Ansaugöffnung (18) und die Stations-Ansaugöffnung (52) derart realisiert sind, dass eine fluidische Verbindung zwischen der Behälter-Ansaugöffnung (18) und der Stations-Ansaugöffnung (52) der Gehäuse-Andockstation (38) hergestellt wird, wenn der Flüssigkeitsaufnahmebehälter (14) mittels der zugehörigen Kopplungseinheit (54) mit der Gehäuse-Andockstation (38) gekoppelt wird.

5. System nach einem der vorhergehenden Ansprüche 3 bis 4, **dadurch gekennzeichnet, dass** die Gehäuse-Andockstation (38) einen Stations-Druckanschluss (72) aufweist, wobei der Behälter-Druckanschluss (46) und der Stations-Druckanschluss (72) derart realisiert sind, dass eine fluidische Verbindung zwischen dem Behälter-Druckanschluss (46) und dem Stations-Druckanschluss (72) der Gehäuse-Andockstation (38) erzeugt wird, wenn der Flüssigkeitsaufnahmebehälter (14) mittels der zugehörigen Kupplungseinheit (54) mit der Gehäuse-Andockstation (38) gekuppelt wird.

6. Das System nach einem der vorhergehenden Ansprüche 3 bis 5, **dadurch gekennzeichnet, daß** die Gehäuse-Andockstation (38) so ausgeführt ist, daß sie seitlich aus dem Wagengehäuse (4) ausgefahren oder seitlich aus dem Wagengehäuse (4) herausgeschwenkt werden kann.

7. System nach einem der vorhergehenden Ansprüche 2 bis 6, wobei die Kabinenandockstation (84) einen Stationsdruckanschluss (90) aufweist, und wobei der Behälterdruckanschluss (46) und der Stationsdruckanschluss (90) der Kabinenandockstation (84) derart ausgebildet sind, dass eine fluidische Verbindung zwischen dem Behälterdruckanschluss (46) und dem Stationsdruckanschluss (90) der Kabinenandockstation (84) hergestellt wird, wenn der Flüssigkeitsaufnahmebehälter (14) mittels der zugehörigen Kupplungseinheit (54) mit der Kabinenandockstation (84) gekuppelt wird.

## Revendications

1. Système pour un véhicule, en particulier un avion, comprenant un chariot (2) pour la collecte de déchets dans un véhicule, comprenant :
- un boîtier de chariot (4) avec une ouverture supérieure de boîtier (6) vers un intérieur de boîtier (8) du boîtier de chariot (4),
- une enceinte à déchets (10) qui est suspendue à l'intérieur du logement (8) et qui est munie d'une ouverture supérieure (12),
l'ouverture de l'enceinte (12) et l'ouverture du boîtier (6) étant disposées l'une par rapport à l'autre, de sorte que les déchets peuvent être introduits par l'ouverture du boîtier (6) et l'ouverture de l'enceinte (12), l'ouverture du boîtier (6) pouvant être fermée par un couvercle de boîtier de chariot (30) qui est monté pivotant sur le boîtier de chariot (4), les déchets pouvant être collectés lorsque le couvercle de boîtier de chariot (30) est ouvert,
dans lequel le chariot (2) comprend un récipient de réception de liquide (14) pour la collecte séparée de déchets liquides, le récipient de réception de liquide (14) ayant une ouverture de récipient supérieure (16), qui peut être fermée par un couvercle de récipient (50) et qui peut être ouverte pour remplir les déchets liquides,
dans lequel le récipient de réception du liquide (14) est relié de manière amovible au boîtier du chariot (4),
dans lequel le récipient de réception de liquide (14) comprend un orifice d'aspiration de récipient (18), au moyen duquel une connexion fluidique peut être réalisée afin d'extraire un fluide d'une section inférieure d'un intérieur (32) du récipient de réception de liquide (14),
le système comprenant en outre un monument de cabine de cuisine (68), comprenant un évier (100) et un poste d'amarrage de cabine (84) fixé à l'évier (100) et ayant un orifice d'aspiration de poste (86), dans lequel le récipient de réception de liquide (14) peut être couplé de manière amovible au moyen d'une unité de couplage associée (54) au poste d'amarrage de cabine (84), et dans lequel l'orifice d'aspiration de station (86) de la station d'amarrage de cabines (84) est réalisé de telle manière qu'une liaison fluidique entre l'orifice d'aspiration de conteneur (18) et l'orifice d'aspiration de station (86) de la station d'amarrage de cabines (84) est produite lorsque le conteneur de réception de liquide (14) est couplé au moyen de l'unité de couplage associée (54) à la station d'amarrage de cabines (84).

2. Le système selon la revendication précédente, **caractérisé en ce que** le récipient de réception de liquide (14) comprend un orifice de pression de récipient (46), au moyen duquel le liquide de rinçage peut être rempli à l'intérieur (32) du récipient de réception de liquide (14).

3. Le système selon la revendication 1 ou 2, **caractérisé en ce que** le bo tier de chariot (4) comprend une station d'accueil de bo tier (38), dans lequel le récipient de réception de liquide (14) comprend une unité de couplage (54), au moyen de laquelle le récipient de réception de liquide (14) est couplé de manière amovible à la station d'accueil de bo tier (38), afin de disposer le récipient de réception de liquide (14) dans ou latéralement sur le bo tier de chariot (4).

4. Le système selon la revendication 3, **caractérisé en ce que** la station d'accueil pour chariot (38) comprend un orifice d'aspiration de station (52), et dans lequel l'orifice d'aspiration de conteneur (18) et l'orifice d'aspiration de station (52) sont réalisés de telle sorte qu'une liaison fluidique entre l'orifice d'aspiration de conteneur (18) et l'orifice d'aspiration de station (52) de la station d'accueil pour chariot (38) est produite lorsque le conteneur de réception de liquide (14) est couplé au moyen de l'unité de couplage associée (54) à la station d'accueil pour chariot (38).

5. Le système selon l'une des revendications précédentes 3 à 4, **caractérisé en ce que** la station d'accueil pour conteneurs (38) comprend un raccord de pression de station (72), dans lequel le raccord de pression de conteneur (46) et le raccord de pression de station (72) sont réalisés de telle sorte qu'une connexion fluidique entre le raccord de pression de conteneur (46) et le raccord de pression de station (72) de la station d'accueil pour conteneurs (38) est produite lorsque le conteneur de réception de liquide (14) est couplé au moyen de l'unité de couplage associée (54) à la station d'accueil pour conteneurs (38).

6. Le système selon l'une des revendications précédentes 3 à 5, **caractérisé en ce que** la station d'accueil pour boîtier (38) est réalisée de telle sorte qu'elle peut être étendue latéralement à partir du boîtier de chariot (4) ou pivotée latéralement hors du boîtier de chariot (4).

7. Le système selon l'une des revendications 2 à 6 précédentes, dans lequel la station d'accueil pour cabines (84) comprend un raccord de pression de station (90), et dans lequel le raccord de pression de réservoir (46) et le raccord de pression de station (90) de la station d'accueil pour cabines (84) sont réalisés de telle sorte qu'une liaison fluidique entre le raccord de pression de réservoir (46) et le raccord de pression de station (90) de la station d'accueil pour cabines (84) est établie lorsque le réservoir de réception de liquide (14) est couplé à la station d'accueil pour cabines (84) au moyen de l'unité de couplage (54) associée.
